# EUROPÄISCHE PATENTSCHRIFT

(11) **EP 2 475 881 B1**
(45) Veröffentlichungstag und Bekanntmachung des Hinweises auf die Patenterteilung: **03.04.2013**
(21) Anmeldenummer: 10747006.4
(22) Anmeldetag: 17.08.2010
(51) Int. Cl.: F03D 11/04, E04H 12/06

(54) **TURM FÜR EINE WINDKRAFTANLAGE UND VERFAHREN ZUM ERRICHTEN EINES TURMES FÜR EINE WINDKRAFTANLAGE**
TOWER FOR A WINDTURBINE AND METHOD FOR ERECTING A TOWER FOR A WINDTURBINE
MÂT D'ÉOLIENNE ET PROCÉDÉ DE CONSTRUCTION D'UN MÂT D'ÉOLIENNE

(30) Priorität: 11.09.2009 DE 102009040908
(43) Veröffentlichungstag der Anmeldung: 18.07.2012
(73) Patentinhaber: Timbertower GmbH, 30165 Hannover (DE)
(72) Erfinder: GREGOR, Prass, 22529 Hamburg (DE)
(74) Vertreter: Wetzel, Philipp
(86) Internationale Anmeldenummer: PCT/EP2010/005032
(87) Internationale Veröffentlichungsnummer: WO 2011/029515

(56) Entgegenhaltungen:
- WO-A1-03/083236
- SU-A1- 479 863
- US-A- 2 358 704
- "Open panelled tower building - has improved load transmission through panels with enclosed contours of rhomboid form", WPI / THOMSON,, 18. November 1975 (1975-11-18), XP002656910,

## Beschreibung

Die Erfindung betrifft Turm für eine Windkraftanlage, wobei im Turminneren zumindest teilweise ein Lehrgerüst vorgesehen ist, mit dem Wandabschnitte haltend verbunden sind, wobei die Wände des Turms zumindest teilweise aus den einzelnen Wandabschnitten hergestellt sind, die über Verbindungsmittel miteinander verbunden sind, und ein Verfahren zum Errichten eines solchen Turmes.

Bei einer Windkraftanlage handelt es sich um eine Vorrichtung zur Erzeugung von elektrischer Energie. Die Windkraftanlage ist mit einem Fundament, einem Turm, der auf dem Fundament errichtet wird, und einer Gondel, die auf dem Turm angeordnet wird, versehen. An der Gondel befindet sich die mit Rotorblättern verbundene Antriebseinheit zur Energieerzeugung.

Die Konstruktion des Turms ist ausgerichtet auf die durch die Gondel auf den Turm erzeugte statische Belastung und die durch die Rotation der Drehflügel des Rotors und der Bewegungsmöglichkeit der Gondel in Abhängigkeit der Windrichtung erzeugten dynamischen Belastungen. Bekannte Türme werden aus Stahlringen oder Betonelementen hergestellt. Die Grundflächen der bekannten Türme sind dabei entweder Polygone oder ringförmige Kreissegmente. Polygonale Türme, die aus einzelnen Segmenten aus Beton hergestellt sind, sind bekannt aus WO 2003/069099 A. Des Weiteren ist bekannt, solche polygonalen Türme aus Holz zu errichten (DE 10 2007 006 652 A1).

Unter wirtschaftlichen Gesichtspunkten ist es erwünscht, die Höhe der Türme wirtschaftlich maximiert zu errichten, da der Ertrag einer Windkraftanlage von der Nabenhöhe des Rotors abhängt und der Ertrag mit Zunahme der Höhe steigt. Gleichzeitig steigen die durch die größere Höhe des Turmes entstehenden Anforderungen an die Statik und das Material bzw. den Materialaufwand des Turmes. Die Wandstärken nehmen zu und dadurch steigt der Errichtungsaufwand des Turms.

Ein dabei entscheidender Aspekt bei Türmen, die aus abschnittsweise angeordneten Segmenten gebildet werden, ist, dass die horizontalen Berührungsflächen der übereinander angeordneten Segmente empfindlich für Schubbelastungen bzw. Querkräfte sind. Dieses muss in der Statik der Türme berücksichtigt werden, damit diese Sollbruchstelle entschärft wird, was zu verstärktem Materialeinsatz führt, und insbesondere einen Einsatz von aufwändigen Verbindungsmittel bedingt.

WO2003/083236A1 offenbart einen Turm für eine Windkraftanlage, bei dem ein Gittermast errichtet wird, um den herum eine Hülle angebracht wird. Der Gittermast trägt die gesamte Last, die auf den Turm wirkt. Dabei findet eine Trennung zwischen strukturell funktionierenden Elementen (Gittermast) und einer nicht strukturellen Hülle, die die Form des Turms in Form eines Vollkörperturms bewirkt, statt. Die Verkleidung wird entweder direkt am Trum angeschraubt oder mit diesem über Klemmkräfte in Verbindung gebracht. In diesem Zusammenhang wird dargelegt, dass eine Gitterstruktur kostentechnische Vorteile gegenüber einem Vollflächentrum aufweist und auch, dass ein Gittertrum lasttechnisch vorteilhaft gegenüber einem Vollflächenturm ist.

Es hat sich gezeigt, dass Türme für Windkraftanlagen aus Holz herstellbar sind, mit denen sich kostengünstig, schnell und unter Materialeinsparung Türme erstellen lassen. Besonders günstig hat sich dabei erwiesen, diese Türme vor Ort aus Einzelbestandteilen zu fertigen, die jeweils direkt mit den benachbarten Elementen über Verbindungsmittel verbunden werden. Dabei hat sich als jedoch das Errichtungsverfahren als verbesserungswürdig erwiesen, dahingehend, dass die einzelnen Bestandteile schnell und mit hohe Präzision miteinander verbunden werden können, ohne das große Montagetolleranzen auftreten.

Aufgabe der Erfindung ist es daher, einen Turm für eine Windkraftanlage bereit zu stellen, der sich mit hinreichender Präzision montieren lässt. Weiterhin ist es die Aufgabe der Erfindung, ein Verfahren für die Errichtung eines solchen Turmes zu schaffen.

Die erfindungsgemäße Aufgabe wird hinsichtlich des Turms dadurch gelöst, dass die Wandabschnitte aus einem Holzwerkstoff bestehen, und dass die Wandabschnitte so ausgeführt sind, dass die Wandabschnitte die gesamte statische Belastung aufnehmen und ableiten, und das Lehrgerüst eine Montagehilfe ist. Dadurch lassen sich die einzelnen Wandabschnitt sicher aufeinander aufsetzen und montieren. Auf einfache Weise wird so die Montagegenauigkeit erhöht. Gleichzeitig kann die gesamte statische Belastung weiterhin durch die Wandelemente aufgenommen werden.

Eine weitere Lehre der Erfindung sieht vor, dass das Lehrgerüst aus Holz besteht und/oder eine Fachwerkskonstruktion ist. Die Errichtung erfolgt dabei sukzessive mit fortschreitendem Baufortschritt. Das zu verwendende Holz ist dabei kostengünstig und sehr gut zu verarbeiten. Bevorzugt ist das Lehrgerüst aus einzelnen Abschnitten aufgebaut. Dabei ist es vorteilhaft, wenn die einzelnen Abschnitte vor Ort gefertigt werden, da damit der Transportaufwand reduziert wird. Dieses ist bevorzugt durch die Verwendung von Holz gewährleistet. Vorteilhaft ist des Weiteren, dass die Fachwerkskonstruktion wenigstens 4 Ständer aufweist, die mit Streben, Riegeln, Kopf- und Sohlenhölzern verbunden sind. Eine weitere Lehre der Erfindung sieht vor, dass das Podest aus wenigstens zwei Abschnitten gebildet ist.

Eine weitere Lehre der Erfindung sieht vor, dass die Wandabschnitte zueinander Helix bildend versetzt angeordnet sind. Durch diese Anordnung zueinander wird die Schubbelastung/Querkraft über die Helix abgeleitet und es existiert kein Ansatzpunkt für ein Abheben des Turm an einer vorgegebenen Stelle. Aus diesem Grund können Wandstärken reduziert werden und es ist insbesondere möglich, einfachere und damit kostengünstigere Verbindungsmittel zu wählen.

Eine weitere Lehre der Erfindung sieht vor, dass es sich bei der Helix um eine Einfachhelix oder um eine aus mehreren Einfachhelices gebildeten Mehrfachhelix handelt. Bei einer Mehrfachhelix ist vorteilhaft, dass die Anzahl der die Mehrfachhelix bildenden Einfachhelices mit der Anzahl der Wandabschnitte in einer horizontalen Ebene des Turms übereinstimmt. Bevorzugt sind die Wandabschnitte bei der Mehrfachhelix als auf die Spitze gestellte Raute vorgesehen. Die Raute ist dabei als Kreissegment vorgesehen oder durch zwei vertikal miteinander verbundene Dreiecke gebildet, wobei die Flächen der Dreiecke in einem Winkel zueinander angeordnet sind, der 360° geteilt durch die Anzahl der Einfachhelices beträgt. Weiterhin ist vorteilhaft, dass die oberen Stoßseiten der einzelnen Bestandteile einer Helix eine durchgehende Linie und/oder eine Stufung aufweisen. Dadurch wird die Belastungsableitung im Turm verbessert.

Eine weitere Lehre der Erfindung sieht vor, dass die Wandabschnitte wenigstens teilweise in den Stößen Schlitze aufweisen, die quer zur Stoßrichtung und/oder längs zur Stoßrichtung angeordnet sind. Bevorzugt werden in die Schlitze Verbindungsmittel eingesetzt, bei denen es sich bevorzugt um Metallbleche, besonders bevorzugt um Lochbleche, handelt, die bevorzugt verklebt werden. Zusätzlich können die Stoßöffnungen mit beispielsweise einem Tape oder Plexiglas abgeklebt werden. Bevorzugt erfolgt das Einbringen des Klebstoffes durch Verspritzen der Räume zwischen Bauteil und Verbindungselement. Alternativ können Holzteile bzw. Holzzugdübel verwendet werden, wenn es sich bei den Bestandteilen um Holzelemente handelt. Bei diesen Verbindungsmitteln handelt es sich um kostengünstige Elemente, die allerdings die notwendigen Festigkeiten hinsichtlich Schub bzw. Schubbelastungen zwischen den einzelnen Bestandteilen bereit stellen.

Neben den Betriebsbelastungen, die auf den Turm einwirken, wirken auch klimatische Belastungen auf den Turm. Bei Stahltürmen wird dieser klimatischen Belastung durch das Aufbringen eines Anstriches auf den Turm entgegengewirkt. Beim Einsatz von Stahlbeton nimmt das Stahlgerüst die Zugbelastungen des Turmes auf. Die Betonüberdeckung nimmt die Druckbelastungen auf und dient gleichzeitig zum Schutz der Stahlkonstruktion gegen die Umwelteinflüsse in Form von Feuchtigkeit und chemischen Reaktionen durch die umgebende Atmosphäre. Die Dicke des Betons muss gewährleisten, dass das Stahlgerüst gegen diese Belastungen geschützt ist. Bei Holzkonstruktionen werden entsprechende Witterungsbelastungen durch Anstriche entgegengewirkt. Gleichzeitig lassen sich nur Holzmaterialien, die für den Außeneinsatz zugelassen sind, für die Konstruktion von Holztürmen einsetzen.

Eine weitere Lehre der Erfindung sieht deshalb vor, dass auf die äußere Oberfläche des Turms wenigstens teilweise eine Beschichtung aufgebracht ist, wobei die Beschichtung bevorzugt so aufgebracht wird, dass die Beschichtung Zugbelastungen aufnimmt, die auf die äußere Oberfläche des Turms wirken, und dass die Beschichtung die äußere Oberfläche gegen von außen auf die Oberfläche des Turmes einwirkende Umwelteinflüsse, insbesondere Feuchtigkeit, abdichtet.

Bezogen auf Holztürme wird es durch die Beschichtung möglich, Holzwerkstoffe und deren Verbindungsmittel einzusetzen, die lediglich eine Zulassung für den Innenausbau besitzen.

Eine weitere Lehre der Erfindung sieht vor, dass die Beschichtung im beschichteten Abschnitt des Turms vollflächig aufgebracht ist, und den beschichteten Abschnitt umhüllt. Dabei ist vorteilhaft, dass es sich bei der Beschichtung um einen Schichtstoff, eine Folie, ein Gewebe, ein Textil oder eine Platte handelt. Besonders bevorzugt handelt es sich um eine Folie, eine Platte, ein Gewebe und/oder Textil aus Kunststoff, wobei besonders bevorzugt Polypropylen, Polyurethan, Polyvinylchlorid, Polyester, Polycarbonat oder Polyethylen als Materialien verwendet werden. Solche Materialien sind in der Lage, Zugspannungen aufzunehmen und gleichzeitig einen Abschluss und damit eine Abdichtung gegenüber den auf die Oberfläche des Turms einwirkenden Umwelteinflüsse bereit zu stellen. Gleichzeitig weisen solche Materialien geringere Flächengewichte als beispielsweise Anstriche auf der Oberfläche des Turmes auf, so dass dieses Gewicht bei der Konstruktion hinsichtlich der statischen Druckbelastung reduziert werden kann, wodurch auch die Turmkonstruktion insgesamt schlanker ausgeführt werden kann. Gleichzeitig sind die Kosten dieser Materialien beispielsweise gegenüber Anstrichen geringer.

Eine weitere Lehre der Erfindung sieht vor, dass die Beschichtung zu unterschiedlichen Zeitpunkten der Turmerrichtung aufgebracht wird. Als erste Variante wird die Beschichtung nach Errichten des Turmes aufgebracht. Dieses kann von oben oder unten erfolgen. Alternativ kann die Beschichtung abschnittsweise während des Errichtens des Turmes oder auf die einzelnen Bestandteile bereits vor Errichtung des Turmes aufgebracht werden. Wird die Beschichtung vor Errichtung des Turmes aufgebracht, so hat es sich als vorteilhaft erwiesen, die Beschichtung vor Ort auf der Baustelle aufzubringen. Hierdurch reduzieren sich die Kosten der Beschichtung und gleichzeitig kann gewährleistet werden, dass die Beschichtung während des Transports der einzelnen Elemente nicht beschädigt wird. Die einzelnen Abschnitte der Beschichtung werden anschließend miteinander verbunden, wobei besonders bevorzugt das Verbinden über ein Verkleben bzw. ein Verschweißen der Stöße erfolgt.

Eine weitere Lehre der Erfindung sieht vor, dass die Beschichtung direkt auf die Bestandteile des Turms aufgebracht ist. Bevorzugt erfolgt das Aufbringen vollflächig durch Verkleben. Alternativ kann eine abschnittsweise Verklebung auf einer Oberfläche eines Bestandteils erfolgen. Durch die Verklebung wird sichergestellt, dass eine Aufnahme der statischen Belastung durch die Beschichtung erfolgt.

Eine weitere Lehre der Erfindung sieht vor, dass der Turm wenigstens teilweise aus Stahl, Beton, insbesondere Stahlbeton, und/oder Holz bzw. Holzwerkstoff errichtet wird. Bevorzugt handelt es sich bei dem Holz bzw. Holzwerkstoff um Brettsperrholz und/oder Holzverbundwerkstoffe.

Eine weitere Lehre der Erfindung sieht vor, dass die Beschichtung bei Holz eine geringere Dampfdurchlässigkeit als das Holz aufweist. Auf diese Weise wird die Diffusion umgekehrt, d. h. dass die Dampfdurchlässigkeit des Turms nicht nach außen hin größer wird, sondern nach innen. Im Inneren des Turms ist weiterhin bevorzugt ein Wärmeerzeuger angeordnet, wobei es sich bevorzugt um die Leistungselektronik einer Windkraftanlage handelt. Die Wärme ist dabei die abgegebene Verlustleistung der Leistungselektronik. Durch die Wärmeerzeugung wird die im Inneren des Turms befindliche Feuchtigkeit nach oben abgeführt und die aus dem Holz austretende Feuchtigkeit zum Inneren des Turms hin bewegt und ebenfalls mit abgeführt. Bei Beschädigung der Beschichtung wird ein Abtransport der Feuchtigkeit nach innen gewährleistet. Durch die in der Feuchtigkeit befindlichen Partikel und Mineralien wird die Beschädigung der Beschichtung nach und nach verschlossen und gleichzeitig weiterhin gewährleistet, dass die Feuchtigkeit nach innen hin entweicht.

Eine weitere Lehre der Erfindung sieht vor, dass die Tragstruktur des Turms zumindest teilweise aus Materialien errichtet ist, die für den Außeneinsatz nicht geeignet sind. Hierbei handelt es sich um Materialien, die eine Zulassung lediglich für den Inneneinsatz bei der Konstruktion von Gebäuden erhalten haben. Durch das Aufbringen der Beschichtung wird es möglich, derartige Materialien und auch Verbindungsmittel für die Tragkonstruktion eines Turms für eine Windkraftanlage einzusetzen, weil die Beschichtung den Zustand des Inneneinsatzes der Materialien gewährleistet.

Eine weitere Lehre der Erfindung sieht vor, dass der Turm aus einzelnen Bestandteilen vor Ort zusammengesetzt ist. Bei den vor Ort zusammengesetzten Bestandteilen handelt es sich um Flachelemente. Durch ein derartiges Zusammensetzen des Turmes aus einzelnen Flachelementen wird gewährleistet, dass der Transportaufwand der einzelnen Türme erheblich reduziert wird.

Die erfindungsgemäße Aufgabe wird hinsichtlich des Verfahrens dadurch gelöst, dass folgende Schritte vorgesehen werden: Montieren eines ersten Abschnitts eines Lehrgerüstes auf einem Fundament; Vorsehen der ersten Wandabschnitte; Montieren der ersten Wandabschnitte auf dem Fundament; Befestigen der ersten Wandabschnitte mit dem ersten Abschnitt des Lehrgerüsts; Aufbringen des nächsten Abschnitts des Lehrgerüst auf die Oberseite des vorherigen Lehrgerüstabschnitts; Anbringen der nächsten Wandabschnitte auf die darunter liegenden Abschnitte und Herstellen einer haltenden Verbindung mit den bereits montierten Wandabschnitten und mit dem Lehrgerüst; Wiederholen der Schritte bis der oberste Abschnitt des Lehrgerüsts montiert ist und die abschließenden Wandabschnitte befestigt sind. Des weiterhin wird mit dem Verfahren ein Turm mit den zuvor genannten Merkmalen errichtet.

Nachfolgend wird die Erfindung an Hand von bevorzugten Ausführungsbeispielen in Verbindung mit einer Zeichnung näher erläutert. Dabei zeigt:
- Fig. 1:: eine räumliche Ansicht des erfindungsgemäßen Turms,
- Fig. 2:: Ansicht A3-A3 zu Fig. 1 in einer ersten Ausführungsform,
- Fig. 3:: Ansicht A1-A1 zu Fig. 1 in einer ersten Ausführungsform,
- Fig. 4:: Ansicht A2-A2 zu Fig. 1 in einer ersten Ausführungsform,
- Fig. 5:: Ansicht X zu Fig. 4 in einer ersten Ausführungsform,
- Fig. 6:: Ansicht A3-A3 zu Fig. 1 in einer zweiten Ausführungsform,
- Fig. 7:: Ansicht A1-A1 zu Fig. 1 in einer zweiten Ausführungsform,
- Fig. 8:: Ansicht A2-A2 zu Fig. 1 in einer zweiten Ausführungsform,
- Fig. 9:: Ansicht X zu Fig. 8 in einer zweiten Ausführungsform,

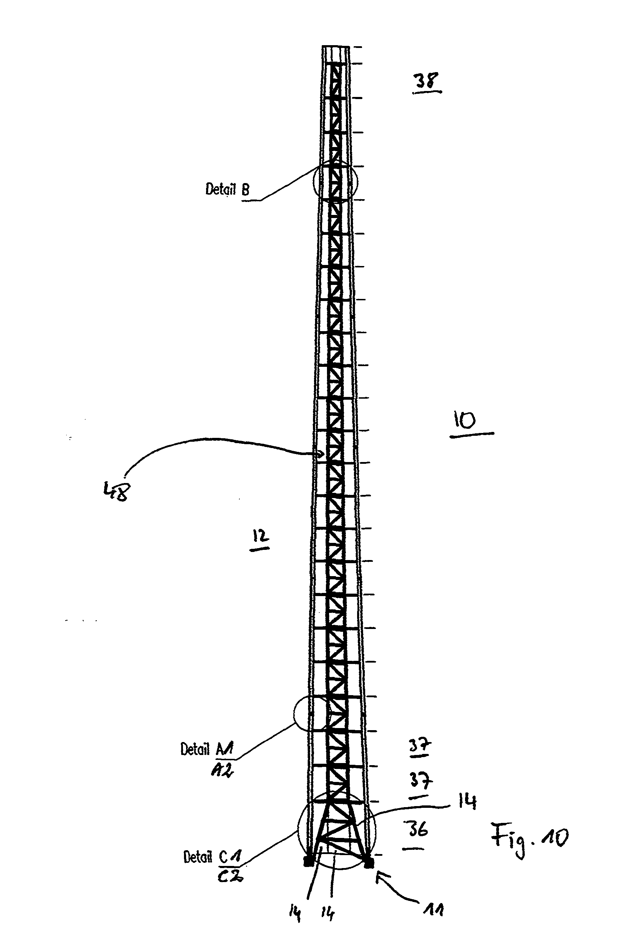

- Fig. 10:: eine räumliche Schnittdarstellung eines erfindungsgemäßen Turmes,
- Fig. 11:: eine Detailansicht A1 zu Fig. 10,
- Fig. 12:: eine Detailansicht A2 zu Fig. 10,
- Fig. 13:: eine Detailansicht B zu Fig. 10,
- Fig. 14:: eine Detailansicht C1 zu Fig. 10,
- Fig. 15:: eine Detailansicht C2 zu Fig. 10,
- Fig. 16:: eine räumliche Schnittdarstellung Gondeladapters eines erfindungsgemäßen Turmes
- Fig.17:: eine Schemadarstellung eines ersten Montageschrittes eines erfindungsgemäßen Verfahrens,
- Fig.18:: eine Schemadarstellung eines zweiten Montageschrittes eines erfindungsgemäßen Verfahrens, und
- Fig.19:: eine Schemadarstellung eines dritten Montageschrittes eines erfindungsgemäßen Verfahrens.

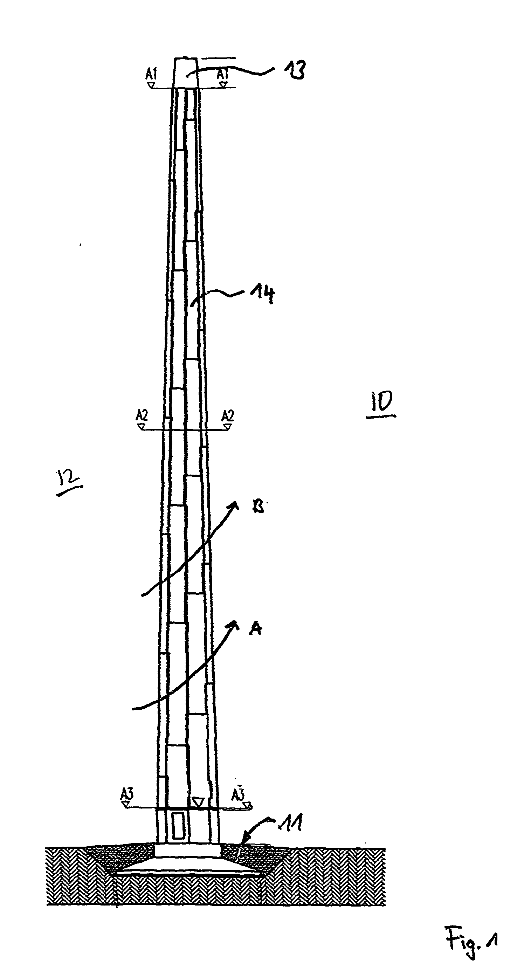

Fig. 1 zeigt einen Turm 10 aus Holz mit einer Nabenhöhe beispielsweise von 100 Metern. Der Turm weist eine Gründung in Form eines Fundaments 11, einen Turmkörper 12 und einen Verbindungsstück 13 zur Aufnahme einer Gondel einer Windkraftanlage (nicht dargestellt) auf.

Die Gründung 11 des Holzturmes 10 erfolgt durch ein Fundament 11, bevorzugt Stahlbetonfundament mit Stahlbetonsockel, besonders bevorzugt als Ortbeton. Die Geometrie des Stahlbetonsockels wird der Geometrie der Holzturmkonstruktion angepasst, wobei hier bevorzugt der Sockel zu einem achteckigen Hohlkörper betoniert ausgeführt wird. Bevorzugt wird im Hohlkörper als Fundamentsockel beispielsweise das für die Stromabgabe ins Netz benötigte Umrichter- und Trafosystem im untergebracht. Der Zugang zur Anlage erfolgt durch den Fundamentsockel und ermöglicht so einen homogenen Aufbau des Holzturmes 10.

Den Hauptanteil des Turmes 10 bildet ein Turmsabschnitt 12, der aus einzelnen Wandabschnitten 14 in Form von Holzplatten zusammengesetzt ist, die einen achteckigen Hohlkörper bilden. Die einzelnen Platten 14 sind hierbei in einer Helixstruktur A angeordnet. Vorliegend ist eine Doppelhelixstruktur dargestellt mit den zwei Helices A und B. Jede einzelne Holzplatte 14 besteht aus miteinander verklebtem Vollholzelementen.

Als Verbindungsmittel kommen bei den horizontalen und vertikalen Verbindungen Schwalbenschwänze 39 oder Lochbleche 15 in Fragen. Des Weiteren sind auch in Spalten eingelegte und bevorzugt verklebte Gewindestangen 20 einsetzbar. Die einzelnen Holzplatten 14 werden mittels stählerner Schwalbenschwänze 39 in die bereits aufgestellten Holzplatten 14 eingehängt. Die Schwalbenschwänze 39 sind mit eingeklebten Gewindestangen 20 an den Holzplatten 14 befestigt.

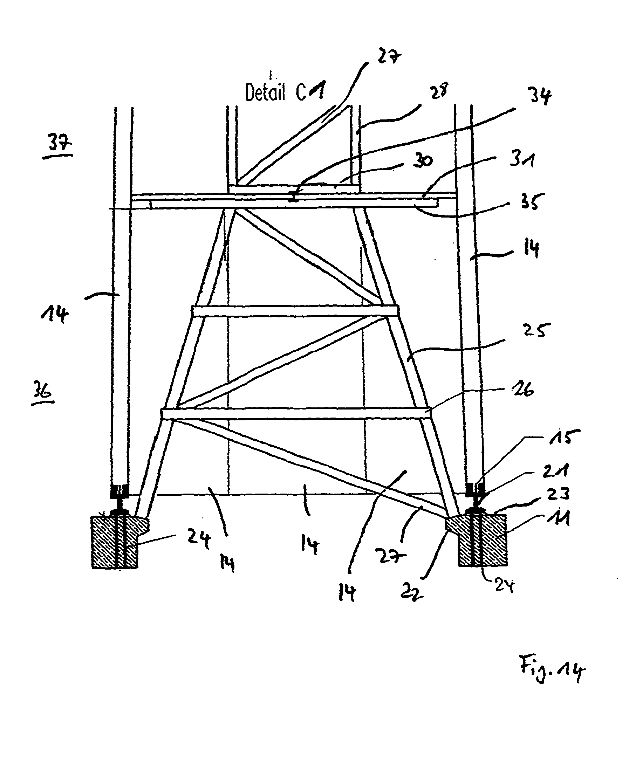

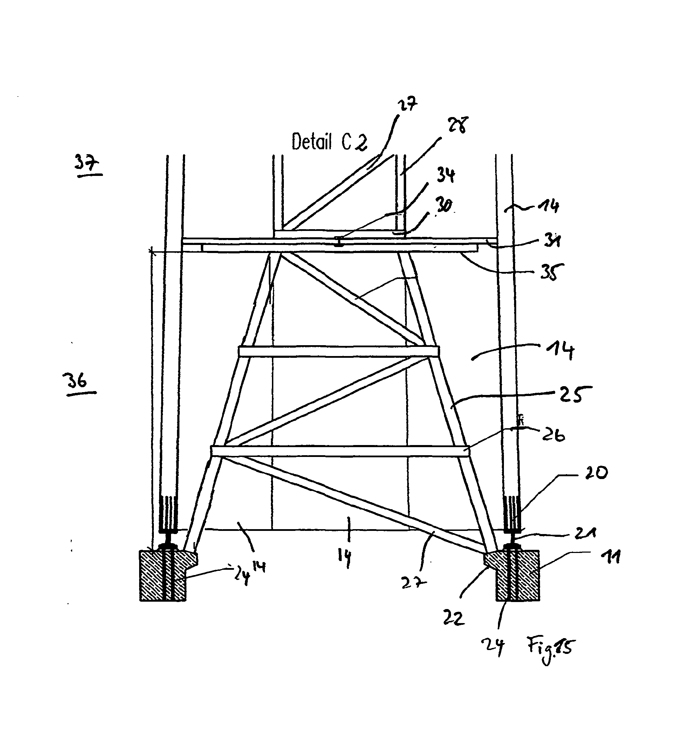

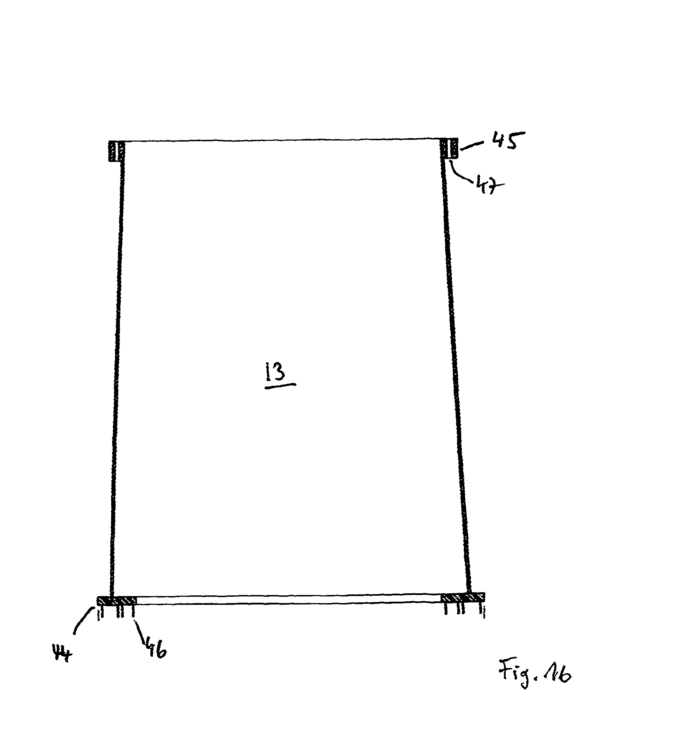

Zur Errichtung Hohlkörpers 12 als Turmkörper durch das Zusammenfügen der Holzplatten 14 in der Helixstruktur A bzw. Doppelhelixstruktur A, B wird als Montagehilfe ein Lehrgerüst 48 errichtet. Das Lehrgerüst besteht aus Abschnitten 36, 37, 38, und wird bevorzugt als Fachwerkkonstruktion ausgeführt. Am oberen Ende des Fachwerks ist ein Podest 31 angeordnet, welches im Holzturm 12 als Aussteifungsebene 31 fungiert. Zwischen dem Fundamentsockel 11 und dem Holzturm 12 befindet sich beispielsweise ein Doppel - T - Träger 21. Die Verbindung des Trägers 21 mit dem Fundament 11 erfolgt über Gewindestangen 24. Die Verbindungen zwischen Holzturm und Doppel - T - Träger als Fußpunktausbildung, wird durch das Vorspannen von eingeklebten Gewindestangen (Fig. 15) oder durch Lochbleche 15 (Fig. 14) hergestellt. Das Verbindungsstück 13 zwischen Holzturm 12 und der Gondel der Windenergieanlage bildet ein Stahlrohradapter 13 in Form eines Kegelstumpfes. (siehe Fig. 16). Der Turm erhält eine vollflächig verklebte, textile Oberfläche (nicht dargestellt), die im Vorfeld nach dem Abbund der Platten 14 aufgebracht wird und nach Beendigung der Richtarbeiten überlappend den Turm 10 vollflächig umschließt.

Der Eingang zum Turm befindet sich im Fundamentsockel und erfolgt über eine Außentreppe mit Podest. Innerhalb des Fundamentsockels werden die Niederspannungskomponenten installiert. Hierzu gehört der Steuerschrank zur Bedienung der Anlage, Leistungsschränke, sowie optional eine Fernüberwachung und eine unabhängige Stromversorgung (USV). Um die Wärme des Transformators abzuführen ist unterhalb des Podestes ein Axiallüfter montiert. Der Aufstieg zum Turmkopf erfolgt über ein leitergeführtes Aufzugsystem 41 oder über eine Steigleiter in Kombination mit einer Steigschutzeinrichtung. Bei Leiterlängen von mehr als 10m sind in Abständen von höchstens 10m Ruhebühnen angebracht. Im Holzturm befinden sich alle 3,75 m Zwischenpodeste 31, die zur Aussteifung der Turmkonstruktion statisch angesetzt werden.

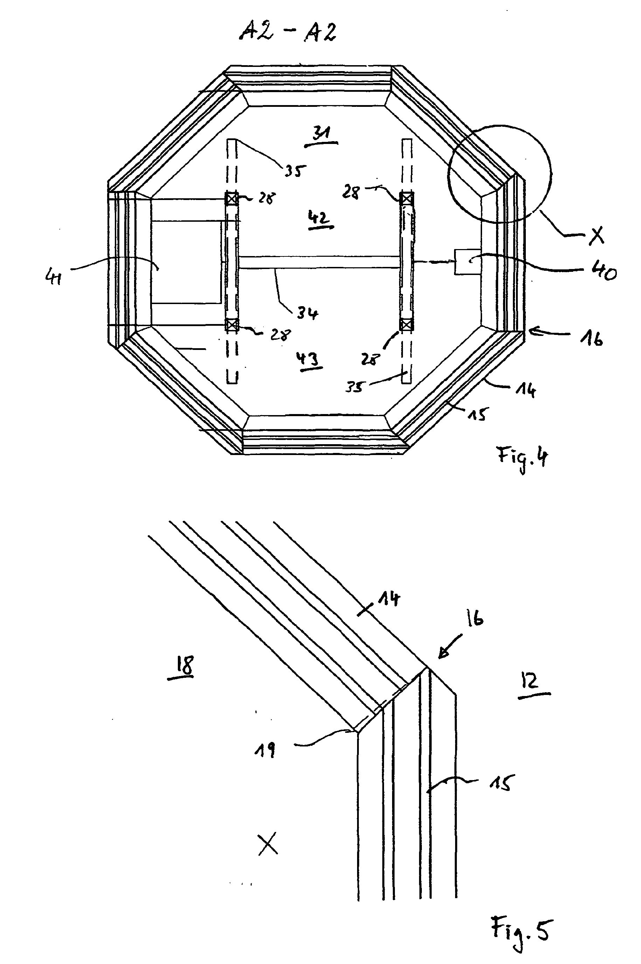

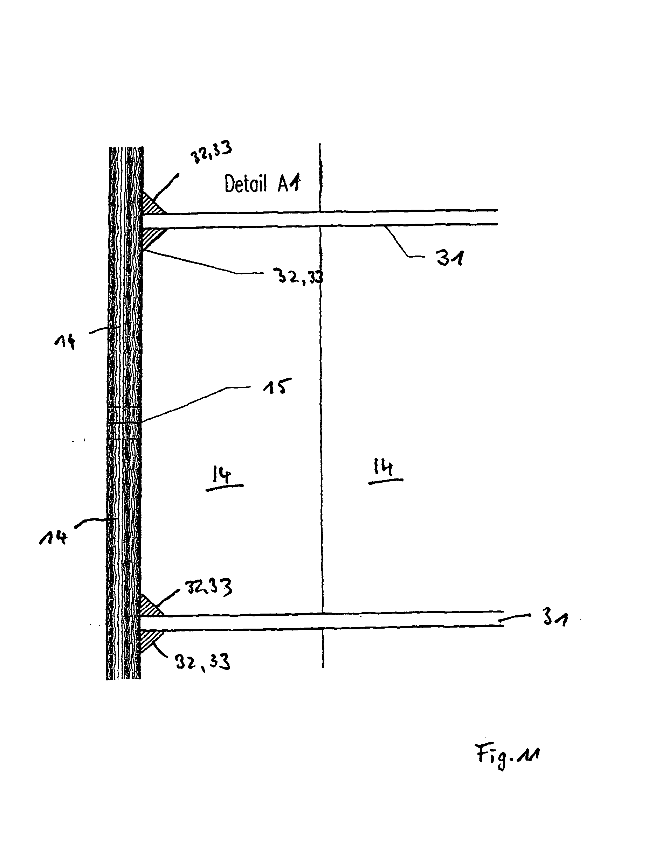

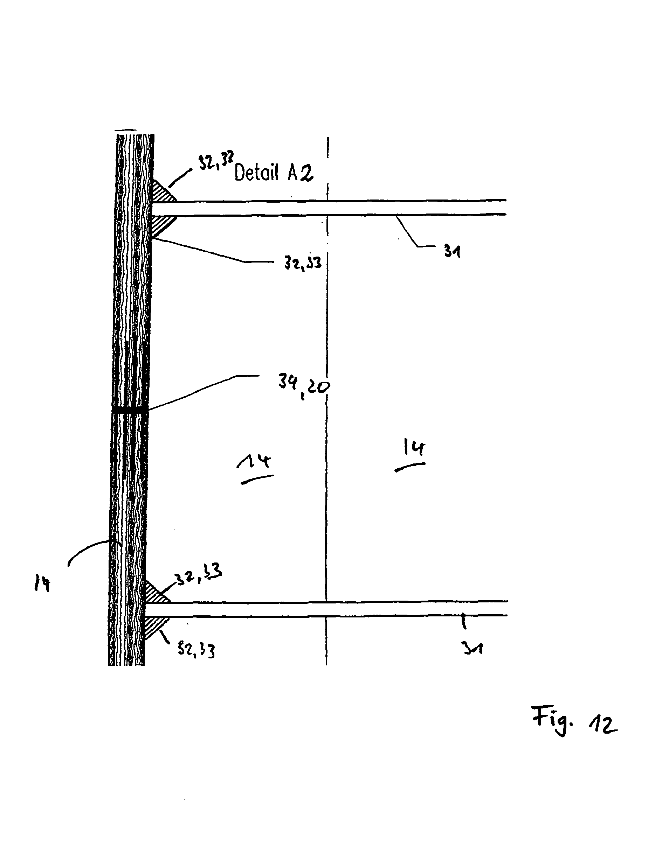

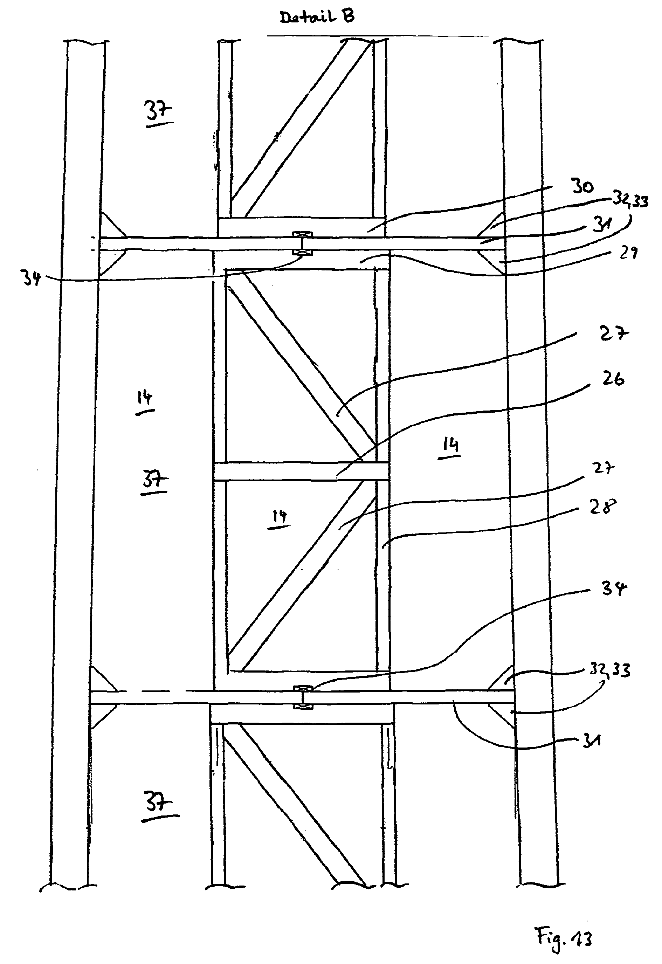

Das Lehrgerüst 48 dient als Montagehilfe und zur Gewährleistung der richtigen Lagefixierung der einzelnen Holzplatten 14. Die einzelnen Aussteifungsebenen 31 bestehen aus Holzplatten 42, 43. Jede einzelne Aussteifungsebenen 31 des Lehrgerüstes 48 wird vierfach durch das Vorsehen von Ständer 25, 28 unterstützt, um die Lage der Aussteifungsebene 31 zu gewährleisten und das Eigengewicht sowie die Montagelasten in das Fundament 31 abzutragen. Die Ständer 25, 28 sind dabei mit Riegeln 26 und Streben 27 sowie Kopf- und Sohlhölzern 29, 30 miteinander als Fachwerk verbunden (Fig. 13). Die einzelnen Teile 42, 43 der Aussteifungsebene 21 sind mit einer Bohle 34 stabilisierend miteinander an ihren sich berührenden Stirnflächen miteinander verbunden. Das Lehrgerüst selber besteht aus einem 1. Lehrgerüstabschnitt, der Basisständer 25 aufweist, die auf einem Gerüstfundament 22 aufstehen, das Bestandteil des Fundaments 11 ist und mit dem Turmfundament verbunden ist. Die Basisständer 25 sind diagonal angeordnet, so dass an ihrem oberen Ende, an dem das Kopfholz 29 bzw. ein Unterzug 35 vorgesehen ist (siehe Fig. 4, 8, 14, 15) , der nächste Lehrgerüstabschnitt 37 mit der eigentlich notwendige Breite des Lehrgerüsts 48 vorgesehen werden kann. In der Aussteifungsebene 31 sind beispielsweise ein Kabelschacht 40 und ein Schacht 41 für einen Aufzug oder ein Leitersystem vorgesehen. Die Ränder der Aussteifungsebene 31 werden mit Kanthölzern 32 bzw. Streichbalken 33 abgedichtet (Fig. 11, 12). Mit diesen Elementen wird auch eine aussteifende Verbindung zwischen Aussteifungseben 31 und Wandelementen 14 des Turms hergestellt. Das Lehrgerüst 48 endet mit einem oberen Lehrgerüstabschnitt 38, der kleiner ist, als die letzten Turmwandabschnitte 14, so dass keine Verbindung zwischen dem Adapter 13 und dem Lehrgerüst 48 entsteht.

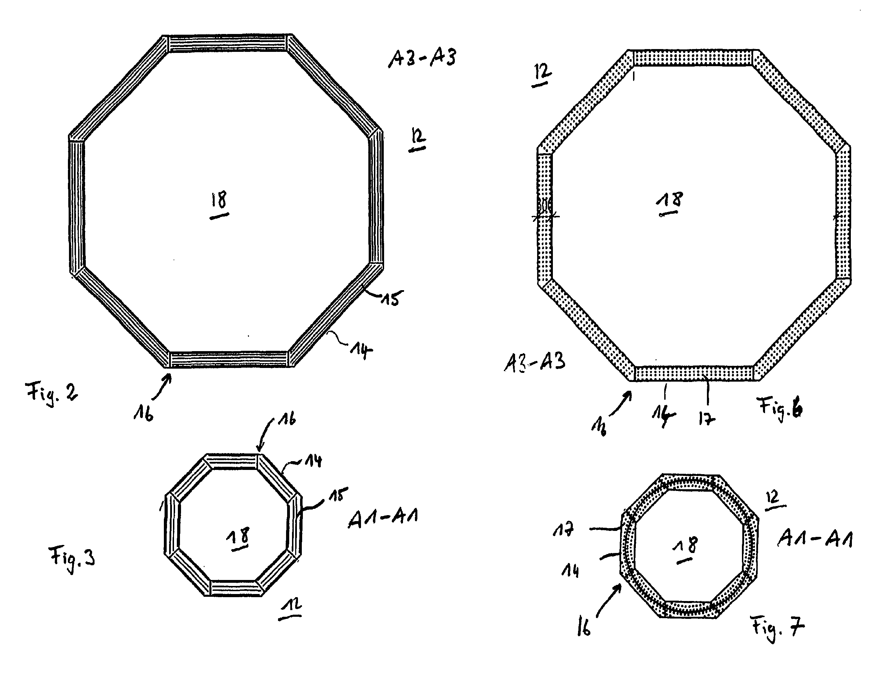

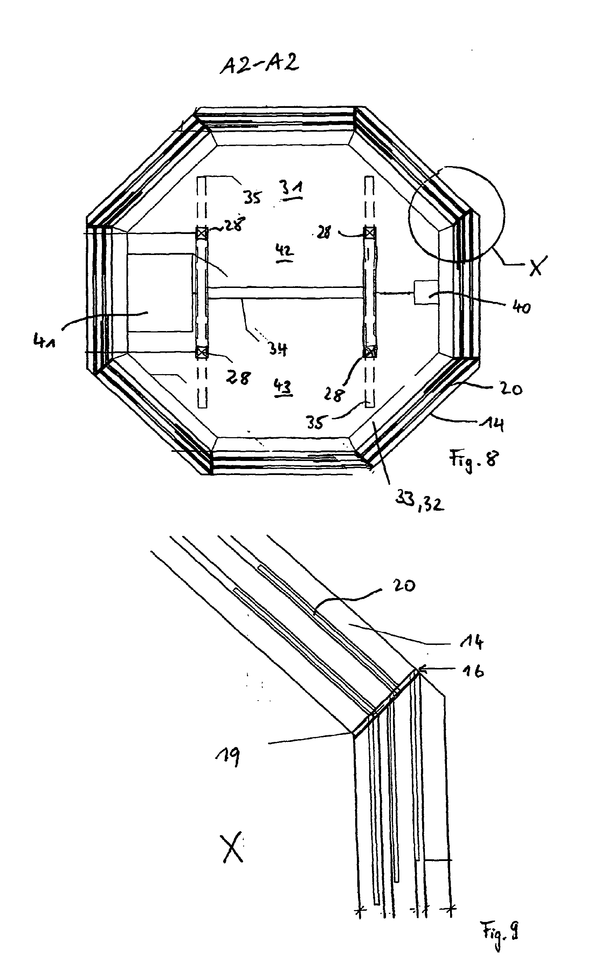

Zum Errichten des Turms 10 werden die fertig abgebundenen Holzplatten 14 zum Aufstellplatz gefahren. Anschließend wird das Lehrgerüst 48 begonnen, indem der unterste erste Abschnitt 36 des Lehrgerüsts 48 auf dem Fundament 11, 22 aufgestellt wird. Die untersten acht Holzplatten 14 werden mit dem ersten Lehrgerüstabschnitt 36 und untereinander mittels Verschraubung form- und kraftschlüssig verbunden. Dabei kommen entweder Lochbleche 15 oder Schwalbenschwänze 39 Danach wird die Konstruktion auf den bereits fertiggestellten Fundamentsockel 22 gehoben. Die Fußpunktverbindung zwischen Holzturm 12 und Fundament 22 erfolgt mittels eingeklebten Gewindestangen 24 in den Platten, welche mit den einzelnen Doppel T- Profilen 21 durch Muttern angeschlossen und bereits vormontiert sind. Nach dem Ablassen des unteren Turmsegmentes erfolgt das Verschrauben mit dem Fundamentsockel. Die Verbindungen der Vertikalstöße 19 der Holzplatten 14 werden zeitgleich mit dem Voranschreiten der Holzturmrichtung ausgebildet. Die Verbindung der Vertikalstöße19 erfolgt durch das Einkleben von Vollholzkeilen 19. Bei der Verbindung mittels Schwalbenschwänze 39 wird durch die geometrische Anordnung beim Abbund der Platten 14 eine hohe Passgenauigkeit der Plattenanordnung im Horizontalstoß beim Zusammenfügen erreicht. Die ankommende Holzplatte 14 wird am jeweils oberen Holzplattenende angesetzt und mittels einer Schraubvorrichtung schlüssig herangezogen. Während des Richtens wird auch hier der Bauzustand durch eine Verschraubung mit dem Lehrgerüst erreicht. Alternativ werden Lochbleche 15 anstelle Schwalbenschwänzen 39 vorgesehen. Die Ausführung der Vertikalstöße mit eingeklebten Vollholzkeilen 19 (Fig. 5, 9). Der form- und kraftschlüssige Verbund im Bereich der Verbindung der Horizontalstöße der Holzplatten erfolgt über eingeklebte Gewindestangen, welche mit dem metallischen Schwalbenschwanz verschraubt und vorgespannt werden. Die Übertragung der Zugkräfte zwischen Holz - Holz bzw. Stahl - Holz kann über Lochblech-Verbinder erfolgen. Die Lochblech-Verbinder sind gelochte Stahlbleche. Die Ausführung Lochblech ist in den Fig. 2 bis Fig. 5 und die Ausführung Schwalbenschwanz ist in den Fig. 6 bis 9 dargestellt.

Der Adapter 13 besteht aus einem ggf. konischen Stahlelement mit einem Fußflansch 44 zum Anschluss an den Turm 12 und einem Kopfflansch 45 zum Anschluss an die Gondel. An Kopfflansch 35 sind Bohrungen 47 vorgesehen zum Durchstecken von Gewindestangen der Gondel zum Herstellen eine haltenden Verbindung. Am Fußflansch 44 sind entweder ebenfalls Bohrungen oder Gewindestangen 46 vorgesehen.

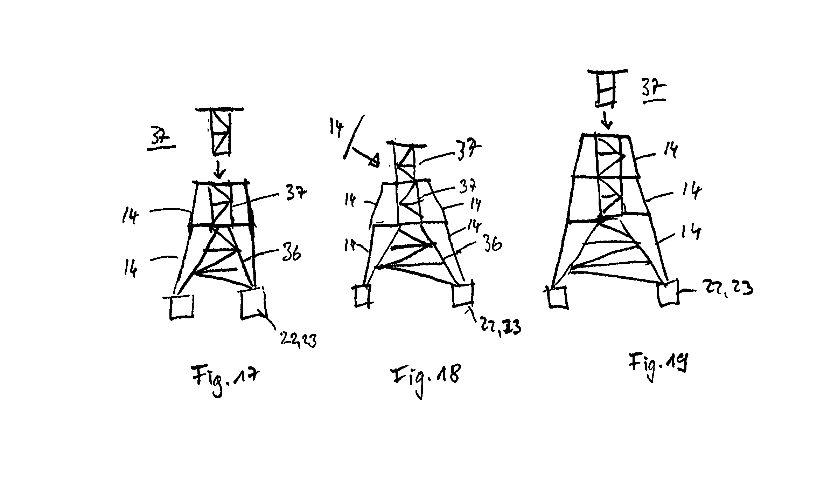

Zur Montage des Turms 12 (Fig. 17 bis 19) wird auf dem Fundament 11 ein unteren Lehrgerüstabschnitt 36 aufgestellt, an den die ersten Wandabschnitte 14 befestigt werden, wobei diese so angeordnet sind, dass sie auf dem Fundament 11 aufstehen. Anschließend wird auf die Aussteifebene 31 der nächste Wandabschnitt 37 abgesetzt und mit dem darunter liegenden Abschnitt 36 verbunden. Wiederum werden die Wandabschnitte 14 umlaufend montiert, wobei eine haltende Verbindung mit den zuvor montierten Wandabschnitten erzeugt wird. Eine Verbindung mit dem Lehrgerüstabschnitt dient der besseren Montierbarkeit. Nach der Abschießenden Montage der Wandabschnitte 14 wird der nächste Lehrgerüstabschnitt montiert. Die Vormontage der Lehrgerüstabschnitte 36, 37, 38 kann dabei vor Ort erfolgen. Bei einer Helixmontage sind die Lehrgerüstabschnitte kleiner in der Höhe als die einzelnen Wandabschnitte 14, so dass die Montage der Lehrgerüstabschnitte sogar im Wechsel mit dem jeweils nächste einem Wandabschnitt erfolgen kann.

### Bezugszeichenliste

- 10: Turm
- 11: Fundament
- 12: Turmabschnitt
- 13: Adapter für Gondel
- 14: Wandabschnitt
- 15: Lochblech
- 16: Verbindungsabschnitt
- 17: Bohrung
- 18: Turminnenraum
- 19: Keilbohle
- 20: Gewindestange
- 21: Doppel-T-Träger
- 22: Gerüstfundament
- 23: Turmfundament
- 24: Gewindestang
- 25: Basisständer
- 26: Riegel
- 27: Strebe
- 28: Ständer
- 29: Kopfholz
- 30: Sohlenholz
- 31: Aussteifungsebene
- 32: Kantholz
- 33: Streichbalken
- 34: Bohle
- 35: Unterzug
- 36: 1. Lehrgerüstabschnitt
- 37: Lehrgerüstabschnitt
- 38: oberster Lehrgerüstabschnitt

- 39: Schwalbenschwanz
- 40: Kabelschacht
- 41: Aufzugsschacht
- 42: 1. Teil Aussteifungsebene
- 43: 2. Teil Aussteifungsebene
- 44: Fußflansch
- 45: Kopfflansch
- 46: Gewindestang
- 47: Bohrung
- A: erste Helix
- B: zweite Helix

## Patentansprüche

1. Turm für eine Windkraftanlage, wobei im Turminneren zumindest teilweise ein Lehrgerüst vorgesehen ist, mit dem Wandabschnitte haltend verbunden sind, wobei die Wände des Turms zumindest teilweise aus den einzelnen Wandabschnitten hergestellt sind, die über Verbindungsmittel miteinander verbunden sind, **dadurch gekennzeichnet, dass** die Wandabschnitte aus einem Holzwerkstoff bestehen, und dass die Wandabschnitte so ausgeführt sind, dass die Wandabschnitte die gesamte statische Belastung aufnehmen und ableiten, und das Lehrgerüst eine Montagehilfe ist.

2. Turm nach Anspruch 1, **dadurch gekennzeichnet, dass** das Lehrgerüst aus mehreren Abschnitten zusammengesetzt sind, wobei ein Abschnitt, bevorzugt an dessen oberen Ende, ein Podest aufweist, mit dem die Wandabschnitte verbunden werden, wobei das Podest bevorzugt eine Aussteifungsebene des Turms ist.

3. Turm nach Anspruch 1 oder 2, **dadurch gekennzeichnet, dass** das Lehrgerüst aus Holz besteht und/oder eine Fachwerkskonstruktion ist.

4. Turm nach Anspruch 3, **dadurch gekennzeichnet, dass** die Fachwerkskonstruktion wenigstens 4 Ständer aufweist, die mit Streben, Riegeln, Kopf- und Sohlenhölzern verbunden sind.

5. Turm nach einem der Ansprüche 1 bis 4, **dadurch gekennzeichnet, dass** das Podest aus wenigstens zwei Abschnitten gebildet ist.

6. Turm nach einem der Ansprüche 1 bis 5, **dadurch gekennzeichnet, dass** das die Wandabschnitte zueinander Helix bildend versetzt angeordnet sind, wobei es sich bevorzugt bei der Helix um eine Einfachhelix oder um eine aus mehreren Einfachhelices gebildeten Mehrfachhelix handelt.

7. Turm nach Anspruch 6, **dadurch gekennzeichnet, dass** die Anzahl der die Mehrfachhelix bildenden Einfachhelices mit der Anzahl der Wandabschnitte in einer horizontalen Ebene des Turms übereinstimmt.

8. Turm nach Anspruch 7, **dadurch gekennzeichnet, dass** der Winkel 360° geteilt durch die Anzahl der Einfachhelices beträgt.

9. Turm nach einem der Ansprüche 1 bis 8, **dadurch gekennzeichnet, dass** die oberen Stoßseiten der einzelnen Bestandteile eine Helix eine durchgehende Linie und/oder eine Stufung aufweisen.

10. Turm nach einem der Ansprüche 1 bis 9, **dadurch gekennzeichnet, dass** die einzelnen Wandabschnitten aus einem Holzwerkstoff hergestellt sind.

11. Turm nach Anspruch 10, **dadurch gekennzeichnet, dass** es sich bei dem Holzwerkstoff um Brettsperrholz und/oder Holzverbundwerkstoff handelt.

12. Turm nach einem der Ansprüche 1 bis 11, **dadurch gekennzeichnet, dass** der Turm aus den einzelnen Wandabschnitten vor Ort zusammensetztbar ist.

13. Turm nach einem der Ansprüche 1 bis 12, **dadurch gekennzeichnet, dass** die Oberfläche der Außenseite des Turms mit einer Beschichtung versehen ist, wobei die Beschichtung bevorzugt wenigstens einen Teil der auf die Oberfläche des Turms wirkende Zugbelastung aufnimmt und die Oberfläche der Außenseite des Turms gegen die von außen auf die Oberfläche einwirkenden Umwelteinflüsse, insbesondere Feuchtigkeit, abdichtet.

14. Turm nach Anspruch 13, **dadurch gekennzeichnet, dass** die Beschichtung auf die Oberfläche der Außenseite des Turms wenigstens teilweise vollflächig aufgebracht ist und/oder dass es sich bei der Beschichtung um einen Schichtstoff, eine Folie, ein Gewebe, eine Platte und/oder ein Textil handelt.

## Claims

1. Tower for a wind power installation, wherein a falsework is provided at least partially in the tower interior, to which wall sections are connected, holding them, with the walls of the tower being produced at least partially from the individual wall sections, which are connected to one another via connecting means, **characterized in that** the wall sections are composed of a wooden material, and **in that** the wall sections are designed such that the wall sections absorb the entire static load and dissipate it, and the falsework is an assembly aid.

2. Tower according to Claim 1, **characterized in that** the falsework is composed of a plurality of sections, with one section, preferably at its upper end, having a platform, to which the wall sections are connected, with the platform preferably being a stiffening level of the tower.

3. Tower according to Claim 1 or 2, **characterized in that** the falsework is composed of wood and/or is a framework structure.

4. Tower according to Claim 3, **characterized in that** the framework structure has at least four stands, which are connected by struts, bars, head blocks and sole blocks.

5. Tower according to one of Claims 1 to 4, **characterized in that** the platform is formed from at least two sections.

6. Tower according to one of Claims 1 to 5, **characterized in that** the wall sections are arranged offset with respect to one another, forming a helix, with the helix preferably being a single helix or a multiple helix formed from a plurality of single helices.

7. Tower according to Claim 6, **characterized in that** the number of single helices which form the multiple helix corresponds to the number of wall sections on a horizontal level of the tower.

8. Tower according to Claim 7, **characterized in that** the angle is 360° divided by the number of single helices.

9. Tower according to one of Claims 1 to 8, **characterized in that** the upper abutment faces of the individual components have a helix, a continuous line and/or a step.

10. Tower according to one of Claims 1 to 9, **characterized in that** the individual wall sections are produced from a wooden material.

11. Tower according to Claim 10, **characterized in that** the wooden material is cross-laminated timber and/or wooden composite material.

12. Tower according to one of Claims 1 to 11, **characterized in that** the tower can be assembled from the individual wall sections on site.

13. Tower according to one of Claims 1 to 12, **characterized in that** the surface of the outside of the tower is provided with a coating, with the coating preferably absorbing at least some of the tensile load acting on the surface of the tower, and sealing the surface of the outside of the tower against the environmental influences, in particular moisture, acting on the surface from the outside.

14. Tower according to Claim 13, **characterized in that** the coating is applied at least in parts over the entire area to the surface of the outside of the tower, and/or **in that** the coating is a layer material, a film, a fabric, a panel and/or a textile.

## Revendications

1. Pylône pour installation éolienne, qui présente un cintre de charpente au moins en partie à l'intérieur du pylône et reliant et retenant des parties de la paroi,
les parois du pylône étant constituées au moins en partie des différentes parties de paroi reliées les unes aux autres par des moyens de liaison,
**caractérisé en ce que**
les parties de paroi sont constituées d'un matériau ligneux et
**en ce que** les parties de paroi sont configurées de telle sorte que les parties de paroi reprennent et évacuent la totalité de la charge statique, le cintre de charpente étant un accessoire de montage.

2. Pylône selon la revendication 1, **caractérisé en ce que** le cintre de charpente est constitué de l'assemblage de plusieurs parties, une partie présentant de préférence à son extrémité supérieure un pied qui relie les parties de paroi, le pied étant de préférence un plan de rigidification du pylône.

3. Pylône selon les revendications 1 ou 2, **caractérisé en ce que** le cintre de charpente est constitué de bois et/ou est une structure en treillis.

4. Pylône selon la revendication 3, **caractérisé en ce que** la structure en treillis présente au moins quatre montants reliés par des entretoises, des traverses, des bois de tête et des bois de semelle.

5. Pylône selon l'une des revendications 1 à 4, **caractérisé en ce que** le pied est formé d'au moins deux parties.

6. Pylône selon l'une des revendications 1 à 5, **caractérisé en ce que** les parties de paroi sont décalées les unes des autres en formant une hélice, l'hélice étant de préférence une hélice simple ou une hélice multiple formée de plusieurs hélices simples.

7. Pylône selon la revendication 6, **caractérisé en ce que** le nombre des hélices simples qui forment l'hélice multiple correspond au nombre des parties de paroi situées dans un plan horizontal du pylône.

8. Pylône selon la revendication 7, **caractérisé en ce que** l'angle est de 360° divisé par le nombre des hélices simples.

9. Pylône selon l'une des revendications 1 à 8, **caractérisé en ce que** les côtés de butée supérieure des différents composants d'une hélice présentent une ligne continue et/ou un gradin.

10. Pylône selon l'une des revendications 1 à 9, **caractérisé en ce que** les différentes parties de paroi sont réalisées en un matériau ligneux.

11. Pylône selon la revendication 10, **caractérisé en ce que** le matériau ligneux est un bois contreplaqué et/ou un matériau composite à base de bois.

12. Pylône selon l'une des revendications 1 à 11, **caractérisé en ce que** le pylône peut être assemblé sur site à partie des différentes parties de paroi.

13. Pylône selon l'une des revendications 1 à 12, **caractérisé en ce que** la surface du côté extérieur du pylône est dotée d'un revêtement, le revêtement reprenant de préférence au moins une partie de la charge de traction qui agit sur la surface du pylône et assurant l'étanchéité de la surface extérieure du pylône vis-à-vis des influences de l'environnement qui agissent de l'extérieur sur la surface, en particulier l'humidité.

14. Pylône selon la revendication 13, **caractérisé en ce que** le revêtement est appliqué au moins sur une partie de la surface du côté extérieur du pylône et/ou en ce que le revêtement est une couche de matériau, une feuille, un tissu, une plaque et/ou un textile.
